# EUROPÄISCHE PATENTSCHRIFT

(11) **EP 1 736 402 B1**
(45) Veröffentlichungstag und Bekanntmachung des Hinweises auf die Patenterteilung: **31.03.2010**
(21) Anmeldenummer: 06012476.5
(22) Anmeldetag: 18.06.2006
(51) Int. Cl.: B62M 1/12

(54) **Fahrrad mit Arm- und Beinantrieb**
Bicycle using both arm and leg propulsion
Bicyclette avec système de propulsion à bras et à jambe

(30) Priorität: 18.06.2005 DE 102005028530; 24.06.2005 EP 05013665; 15.07.2005 DE 102005033740; 22.09.2005 EP 05020622; 04.10.2005 EP 05021856
(43) Veröffentlichungstag der Anmeldung: 27.12.2006
(60) Teilanmeldung: 09012071.8
(73) Patentinhaber: Kraiß, Martin, 89081 Ulm (DE)
(72) Erfinder: Kraiß, Martin, 89081 Ulm (DE)

(56) Entgegenhaltungen:
- DE-A1- 19 829 750
- DE-C- 116 346
- DE-C- 826 830
- FR-A- 743 559
- US-A- 4 498 684
- US-A- 4 685 692
- US-A- 5 082 302
- US-A- 6 099 009

## Beschreibung

Bei der Erfindung handelt es sich um ein Fahrrad mit Arm und Beinantrieb.

Ein Fahrrad ist ein Fahrzeug, das vom Fahrradfahrer mit Muskelkraft angetrieben wird. In der Regel ist es einspurig und besitzt zwei Räder. Es gibt aber auch dreirädrige, zweispurige Fahrräder, oder zweirädrige Fahrräder mit zusätzlichen Stützrädern.

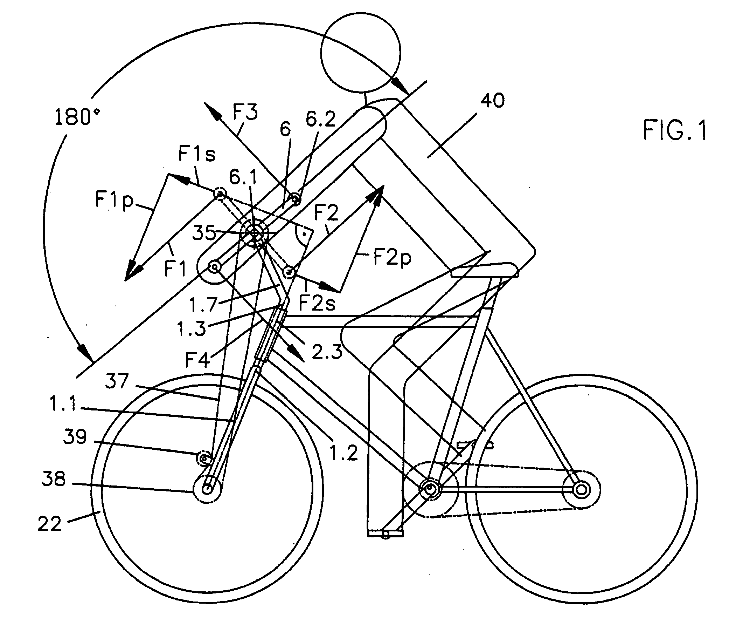

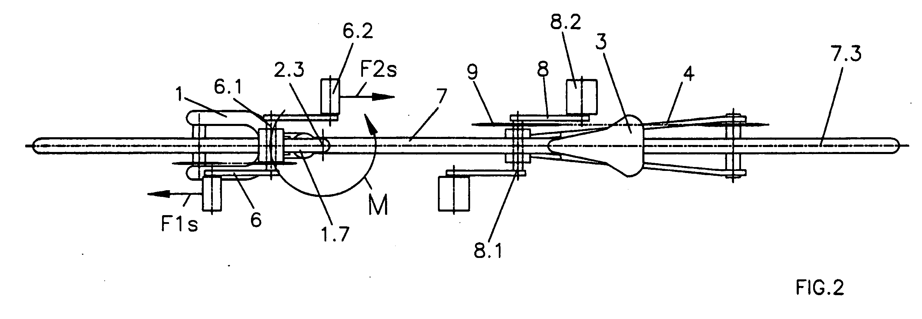

Bekannte Fahrräder mit Arm- und Beinantrieb werden über die Arme gelenkt und angetrieben. DE 198 29 750 A1 offenbart ein Fahrrad gemäß dem Oberbegriff der unabhängigen Ansprüche 1 und 10. Die Figuren 1 und 2 zeigen ein solches Fahrrad nach dem Stand der Technik. Hierbei wird der Armkurbelantrieb von den Armen angetrieben und besteht aus zwei Handkurbeln 6 mit Handkurbelgriffen 6.2 und einer Achse 6.1. Die Achse 6.1 der Handkurbeln 6 ist hierbei meist im Vorbau 1.7 der Gabel 1 gelagert. Auf den Handkurbeln 6 sind die Handkurbelgriffe 6.2 drehbar gelagert. Die Gabel 1 besteht aus den Gabelrohren 1.1, der Gabelbrücke und dem Gabellagerrohr 1.3. Der Vorbau 1.7 ist fest mit dem Gabellagerrohr 1.3 der Gabel 1 verbunden. Die Gabel 1 des Vorderrades 22 ist über das Lenkkopflager im Fahrradrahmen 7 drehbar, um die Lenkkopflagerachse 2.3, gelagert. Somit lenkt der Fahrradfahrer 40 das Fahrrad über die Handkurbeln 6. Die Handkurbeln 6 treiben das Vorderrad 22 an. Dazu verbindet eine Antriebskette 37 das Antriebsritzel 35, das an der Handkurbel 6 befestigt ist, mit dem Antriebsritzel 38 des Vorderrades 22. Die rechte und die linke Handkurbel 6 sind in einem 180° Winkel zueinander angeordnet. In dieser Winkelanordnung ist die Kurbelbewegung der Arme am effektivsten und gleichmäßigsten. Während ein Arm an der einen Handkurbel 6 zieht, drückt der andere Arm an der anderen Handkurbel 6.

Der Nachteil dieser Ausführung ist, dass der Antrieb über die Arme die Lenkbewegung stört. Dieser Nachteil wird in der Anmeldung Deutsches Patent DE 196 32 519 A1auf Seite 5, Zeile 18-24 beschrieben. Wenn der Fahrradfahrer 40 das Fahrrad mit seinen Armen über die Handkurbel 6 antreibt, dann wirkt an einem Handkurbelgriff 6.2 eine Kraft F3 und am zweiten Handkurbelgriff 6.2 eine Kraft F4 (FIG.1). Haben die Arme die Handkurbeln 6 um 90° weiter gedreht (gestrichelt dargestellt), dann wirken eine Kraft F1 und F2. Alle Kräfte F1, F2, F3, F4 kann man in jeweils eine Kraftkomponente senkrecht zur Lenkkopflagerachse 2.3 und eine Kraftkomponente parallel zur Lenkkopflagerachse 2.3 zerlegen. Für die Kraft F1 wirkt die Kraftkomponente F1s senkrecht und die Kraftkomponente F1p parallel zur Lenkkopflagerachse 2.3. Für die Kraft F2 wirkt die Kraftkomponente F2s senkrecht und die Kraftkomponente F2p parallel zur Lenkkopflagerachse 2.3. Die Kraftkomponenten die senkrecht zur Lenkkopflagerachse 2.3 wirken erzeugen ein Moment M um die Lenkkopflagerachse 2.3. Die Lenkkopflagerachse 2.3 ist die Lenkachse der Gabel 1. Die Draufsicht des Fahrrades in FIG.2 zeigt die Kraftkomponenten F1s und F2s die das Moment M erzeugen. Für eine Geradeausfahrt des Fahrrades muss dieses Moment M aufgehoben werden. Dieses Moment M kann nur durch ein entsprechendes Gegenlenken des Fahrradfahrers 40 aufgehoben werden. Dieses ständige Gegenlenken erfordert vom Fahrradfahrer 40 zusätzliche Kraft und Konzentration. Aus diesem Grund haben sich diese Fahrräder nicht durchgesetzt. Andere bekannte Fahrräder vermeiden, dass während des Kurbelns mit den Armen ein Moment M entsteht, indem bei ihnen die beiden Kurbeln 6 in einem Winkel 0° zueinander angeordnet sind. Diese Anordnung ist aber weniger effektiv, da beide Arme, abhängig von der jeweiligen Kurbelstellung, gleichzeitig an beiden Handkurbelgriffen 6.2 ziehen oder drücken. Außerdem ist der Bewegungsablauf beim Kurbeln nicht so gleichmäßig, wie bei einer Kurbelanordnung von 180°, da sich der Oberkörper, der Kurbelbewegung folgend, ständig vor und zurück bewegt.

Die Aufgabe der Erfindung ist es, dass der Fahrradfahrer seine Antriebskraft optimal auf das Fahrrad übertragen können. Weiterhin ist es die Aufgabe der Erfindung die Lenkung des Fahrrades vor dem Einfluss von Antriebskräften zu bewahren. Der Fahrradfahrer soll das Fahrrad mit seiner ganze Kraft antreiben können und dabei das Fahrrad sicher und präzise lenken können.

Die Erfindung löst das geschilderte Problem, durch den kennzeichnenden Teil der Ansprüche 1 und 10. Der Arm- und der Beinantrieb sind Kurbelantriebe. Diese Antriebsart ist von allen Antriebsarten die effektivste und entspricht am ehesten der Ergonomie des Menschen. Das unerwünschte Moment M, das durch den Armkurbelantrieb auf die Lenkung wirkt, wird dabei durch die Erfindung auf ein Minimum verringert oder ganz kompensiert.

Im Folgenden werden Ausführungsbeispiele der Erfindung beschrieben. In den Ausführungsvarianten A lenkt der Fahrradfahrer das Fahrrad nicht über die Handkurbeln. Er lenkt es über den Sattel 3. Die Handkurbeln sind statt in der Gabel im Rahmen des Fahrrades gelagert. Dadurch wirkt das Moment M auf den Fahrradrahmen und den Körper des Fahrradfahrers anstatt auf die Lenkung.
Die Erfindung ermöglicht es dem Fahrradfahrer die Handkurbeln 6 mit seiner ganzen Kraft anzutreiben, ohne dass dadurch gefährliche Lenkeinflüsse entstehen. Der Fahrradfahrer kann zum Antrieb des Fahrrades seine ganze Arm- und Beinkraft einsetzen und dabei das Fahrrad sicher und präzise lenken.

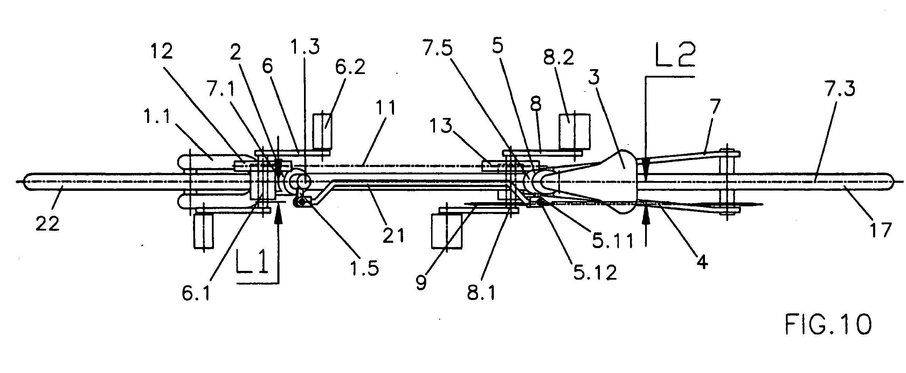

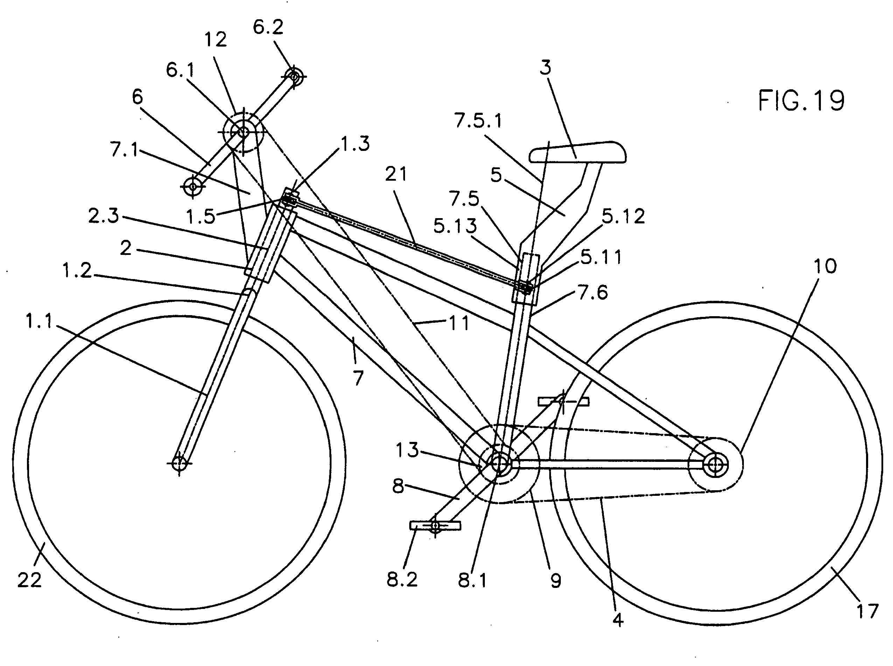

In den folgenden Varianten A (A2 bis A4) der Erfindung lenkt der Fahrradfahrer die Gabel 1 des Fahrrades über den Sattel 3 des Fahrrades. Er lenkt, indem er auf dem Sattel sitzt und über drehen und schwenken seiner Hüfte den Sattel bewegt. Das Kurbellager der Handkurbeln 6 befindet sich dabei in einem Rahmenstück 7.1 des Fahrradrahmens 7 (FIG. 19, 10). Dadurch werden die Kräfte, die beim Antrieb auf die Handkurbeln 6 wirken, vom Fahrradrahmen 7 aufgenommen. Die Lenkung ist damit vom Antrieb entkoppelt.
Noch ein Vorteil dieser Varianten ist, dass die Antriebskraft der Arme einfach über einen Synchronriemen 11 übertragen wird. Dieser Riemen verbindet die Handkurbeln 6 mit den Tretkurbeln 8 und verläuft parallel zur Antriebskette 4 des Hinterrades 17. Somit ist keine aufwendige Umlenkmechanik notwendig, welche erst den Armantrieb auf das Hinterrad ermöglicht, wenn sich die Armkurbeln 6 auf der sich schwenkenden Gabel befinden (vgl. PCT Patent WO 00/63066).

Weiterhin ist auch keine zweite Gangschaltung notwendig, über die die Antriebskräfte der Armkurbel auf das Vorderrad übertragen werden. Für den Arm und den Beinantrieb kann eine gemeinsame Schaltung verwendet werden, was Gewicht und Kosten spart.
Weitere bekannte Fahrräder verfügen ebenso über einen Armkurbelantrieb, der im Fahrradrahmen gelagert ist. Allerdings hat keines dieser Fahrradkonzepte die Übertragung der Lenkkraft befriedigend gelöst. Aufgrund diese Mangels kann keines dieser Fahrräder sicher gefahren werden. In dem Patent DE 198 29 750 A1 lenkt der Fahrradfahrer indem er den Sattel dreht. Zum Lenken sitzt der Fahrradfahrer auf dem Sattel und dreht diesen über seine Pobacken.

In der Variante A2a ist die Gabel 1 im Lenkkopflager 2 des Fahrradrahmens 7 drehbar gelagert (FIG.19,10). In ihr ist das Vorderrad 22 drehbar gelagert. Die Gabel 1 besteht aus den Gabelrohren 1.1, der Gabelbrücke 1.2 und des Gabellagerrohres 1.3. Die Seitenangaben "links" und rechts" bedeuten in allen geschilderten Varianten, die Seiten aus der Sicht des Fahrradfahrers der in Fahrtrichtung auf dem Fahrrad sitzt.
Der Fahrradrahmen 7 enthält eine Rahmenstück 7.1, indem die Handkurbeln 6 über eine Achse 6.1 drehbar gelagert sind. Auf den Handkurben 6 sind die Handkurbelgriffe 6.2 drehbar gelagert.
Die Tretkurbeln 8 sind mit der Achse 8.1 verschraubt. Diese Achse 8.1 ist über das Tretlager drehbar im Fahrradrahmen 7 gelagert.
Zum Antrieb des Fahrrades bewegt der Fahrer mit seinen Händen die Handkurbeln 6 und mit seinen Füßen die Tretkurbeln 8. An den Kurbeln 6,8 sind Synchronscheiben 12,13 befestigt. Diese sind über einen Synchronriemen 11 miteinander verbunden. Somit ist ein synchroner Lauf der Kurbeln 6,8 gewährleistet. Der Synchronriemen 11 verläuft, aus Fahrersicht, rechts vom Fahrradrahmen 7. Auf der linken Seite des Fahrradrahmens 7 verläuft die Antriebskette 4. Sie treibt über das Antriebskettenrad 9, welches fest mit der Tretkurbel 8 verbunden ist, und über das Antriebsritzel 10 das Hinterrad 17 an. Alternativ sind die Synchronscheiben 12,13 Kettenritzel und der Synchronriemen 11 ist eine Kette.Alternativ ist die Synchronscheibe 13 mit dem Antriebskettenrad 9 fest verbunden. Beide sind, um die Achse 8.1 der Tretkurbeln 8, drehbar gelagert und über einen Freilauf mit der Achse 8.1 verbunden. Die Synchronscheibe 12 ist, um die Achse 6.1 der Handkurbeln 6, drehbar gelagert und über einen Freilauf mit der Achse 6.1 verbunden.

Bei dieser Ausführung kann der Fahrradfahrer das Fahrrad nur über die Tretkurbeln 8 antreiben, ohne dass sich dabei die Handkurbeln 6 bewegen, oder er kann es nur über die Handkurbeln 6 antreiben, ohne dass sich dabei die Tretkurbeln 8 bewegen,oder er kann es über die Handkurbeln 6 und die Tretkurbeln 8 gleichzeitig antreiben.

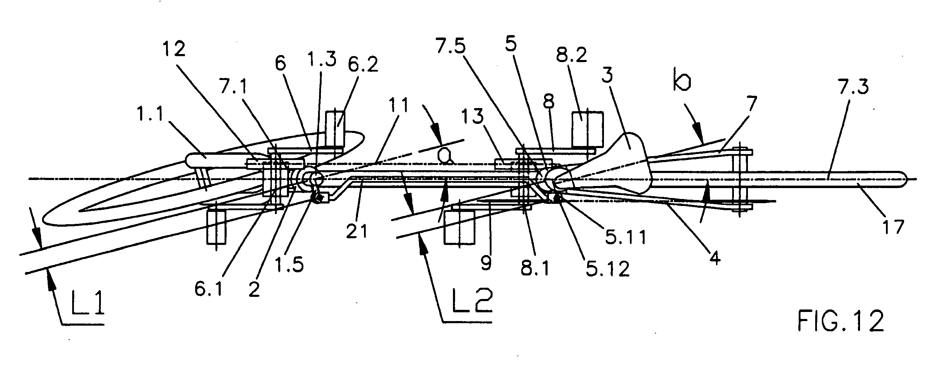

Bei der erfindungsgemäßen Variante A2a wird das Fahrrad über den Sattel 3 gelenkt, welcher fest am Lenkerarm 5 befestigt ist.
Der Lenkerarm 5 ist drehbar im Lager 7.5 des Fahrradrahmens 7 gelagert (FIG.19). In dieser Variante lenkt der Fahrradfahrer durch eine Drehbewegung seiner Hüfte. Bei dem Lager 7.5 befindet sich das Rohr 5.13 des Lenkerarms 5 über dem Rohr 7.6 des Fahrradrahmens 7. Zwischen den beiden Rohren befinden sich Rillenkugellager, Rollenlager oder ein Gleitlager. Der Lenkerarm 5.11 ist mit dem Lenkerarm 5 fest verbunden (FIG.19,10). Der Lenkerarm 1.5 ist mit dem Gabellagerrohr 1.3 fest verbunden.
Die Lenkerarme 5.11 und 1.5 sind über den Zwischenlenker 21 verbunden. Der Zwischenlenker 21 ist gebogen, damit er nicht den Beinen des Fahrradfahrers hinderlich ist. Der Lenkerarm 5.11 ist mit dem Zwischenlenker 21 über einen Bolzen 5.12 verbunden. Der Bolzen 5.12 verbindet den Stangenkopf des Lenkerarms 5.11 mit dem Gabelkopf des Zwischenlenkers 21. Im Stangenkopf des Lenkerarms 5.11 sitzt ein Kugelgelenk das Winkeländerungen zwischen dem Lenkerarm 5.11 und dem Zwischenlenker 21 ausgleicht. Ebenso ist die Verbindung des Lenkerarms 1.5 mit dem Zwischenlenker 21 ausgeführt.
Dreht der Fahrradfahrer den Sattel 3 gegen den Uhrzeigersinn dann lenkt die Gabel 1 nach links. Dreht der Fahrradfahrer den Sattel 3 im Uhrzeigersinn dann lenkt die Gabel 1 nach rechts. Die Drehrichtungen des Sattels 3 und die Lenkrichtungen der Gabel 1 sind gleichsinnig. FIG.10 und FIG.12 zeigen die Draufsicht des Fahrrades. FIG.10 zeigt die Stellung der Gabel 1 und des Sattels 3 beim Geradeauslauf. FIG.12 zeigt die Stellung der Gabel 1 und des Sattels 3 bei einer Lenkbewegung des Fahrrades nach links. L1 ist der Abstand von dem Bolzen des Lenkerarmes 1.5 bis zu der Drehachse der Gabel 1, diese Achse ist ebenso die Lenkkopflagerachse 2.3. L2 ist der Abstand von dem Bolzen 5.12 des Lenkerarmes 5.11 bis zu der Drehachse des Sattels 3, diese Achse ist ebenso die Drehachse 7.5.1 des Lagers 7.5.

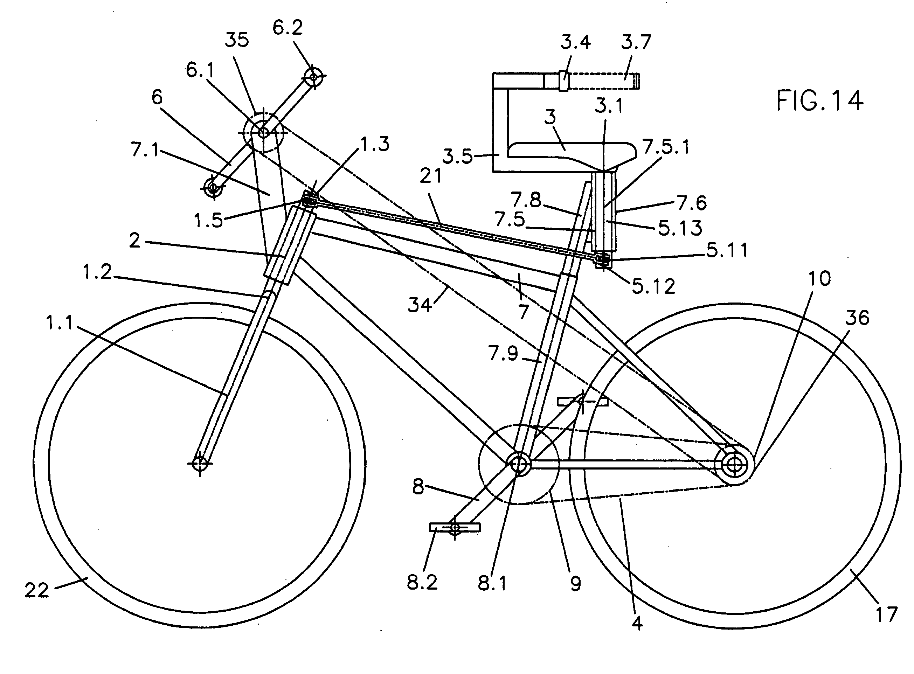

In der Ausführung der Fig.14 besteht der Lenkerarm 5 nur aus dem Rohr 5.13 das fest am Sattel 3 befestigt ist. Das Rohr 7.6 der Lagerung 7.5 ist fest mit dem Rohr 7.8 verbunden. Bei dieser Lagerung 7.5 steckt das Rohr 5.13 des Lenkerarms 5 im Rohr 7.6 und kann sich darin frei drehen. Das Rohr 7.8 ist im Rohr 7.9 des Fahrradrahmens 7 festgeklemmt. Zur Sattelhöhenverstellung kann diese Klemmung gelöst werden und das Rohr 7.8 im Rohr 7.9 verschoben werden.

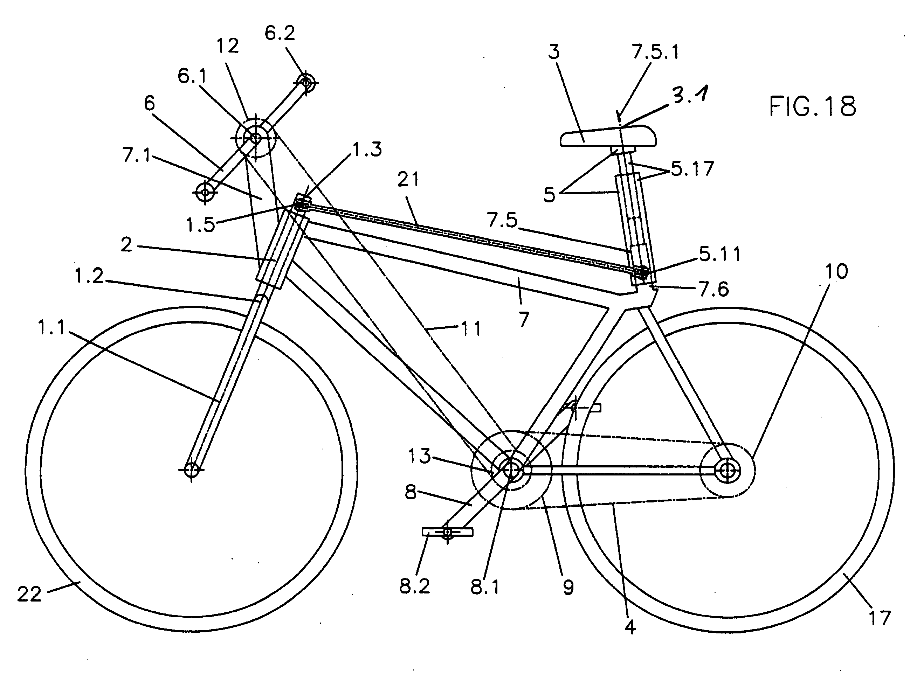

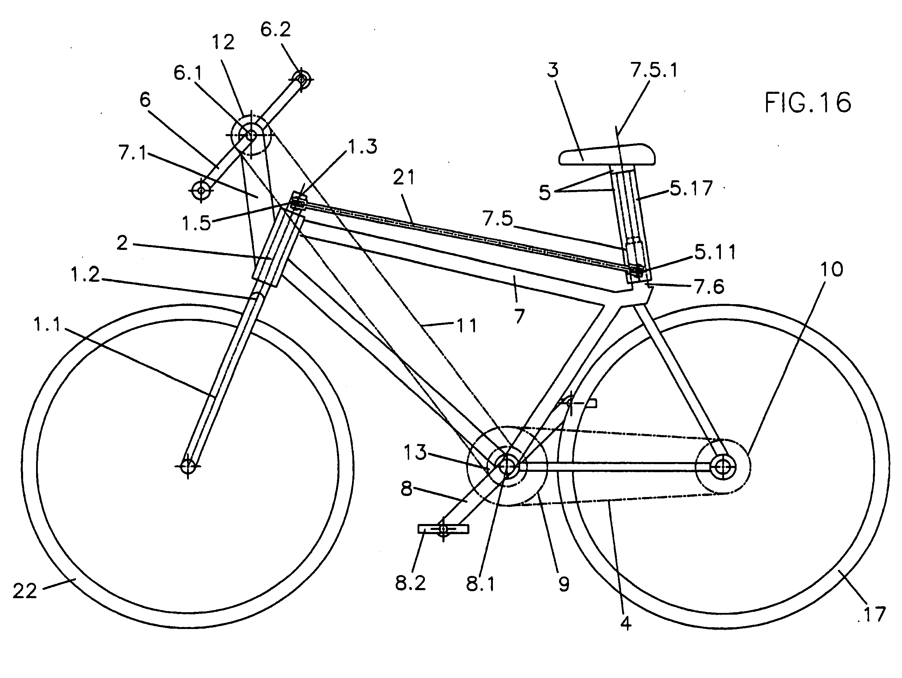

Die erfindungsgemäße Variante A3b entspricht der Variante A2a. Allerdings ist hier die Drehachse 7.5.1 des Lagers 7.5 nach vorne geneigt. Der Lenkerarm 5 besitzt in seinem Inneren eine teleskopierbare Vielkeilwelle 5.17. und hat an seinem unteren Ende eine Bohrung, die das Lager 7.5 aufnimmt (FIG.16). Damit der Sattel 3 dem Hinterteil und der Hüfte des Fahrradfahrers folgt ist der Sattel 3 entweder mit Gurten am Fahrradfahrer befestigt, oder eine Feder drückt die Vielkeilwelle 5.17 auseinander und somit den Sattel 3 nach oben (FIG.18).

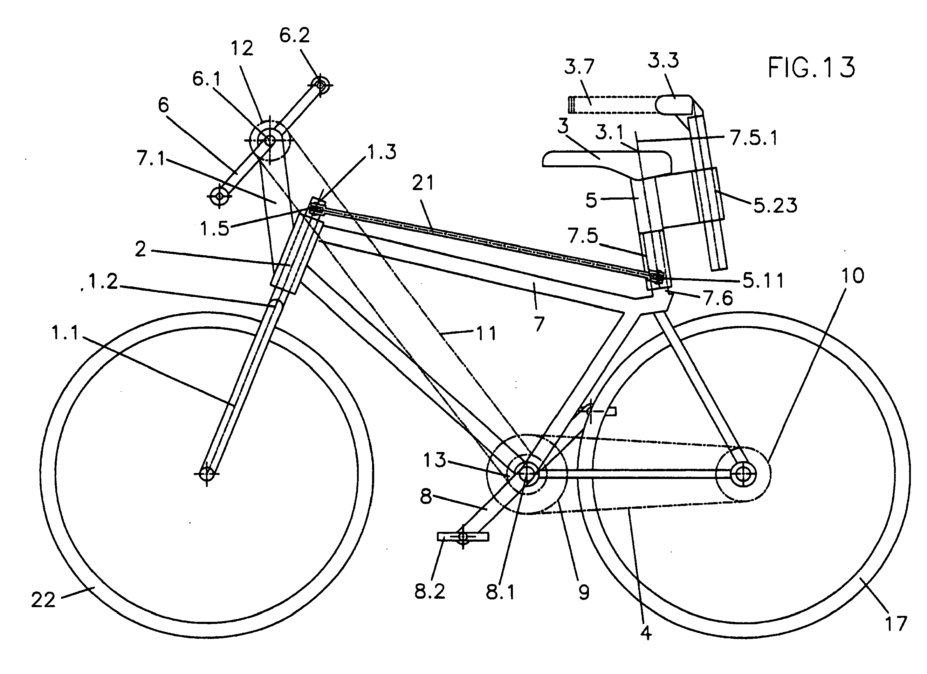

Die Variante A3d entspricht der Variante A2a. Wie in der Variante A2a ist der Sattel 3, um die Drehachse 7.5.1, drehbar gelagert. Im Gegensatz zur Variante A2a ist allerdings eine Hüftstütze 3.3, für die Hüfte des Fahrradfahrers, am Lenkerarm 5 des Sattels 3, über eine Vielkeilwelle 5.23, linear verfahrbar gelagert (FIG.13).
Der Vorteil dieser Anordnung ist, dass der Fahrradfahrer auch stehend fahren kann und gleichzeitig die Hüftstütze 3.3 an seiner Hüfte bleibt. Der Fahrradfahrer überträgt beim Drehen seiner Hüfte das Drehmoment, das sogenannte Lenkdrehmoment, welches er über seine Hüfte auf die Hüftstütze 3.3 ausübt, über die Vielkeilwelle 5.23, den Lenkerarm 5 an den Lenkerarm 5.11.

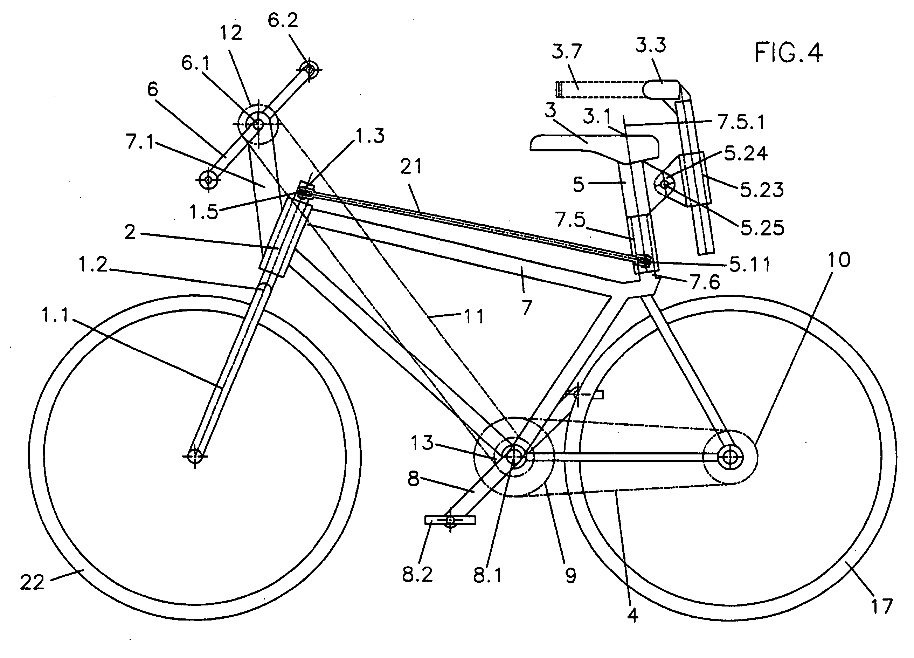

Die erfindungsgemäße Variante A3e entspricht der Variante A3d. Allerdings ist hier die Vielkeilwelle 5.23 über ein Gelenk 5.24 mit dem Lenkerarm 5 des Sattels 3 verbunden (FIG.4). Die Vielkeilwelle 5.23 kann somit um die Achse 5.25 des Gelenks 5.24 schwenken. Dies erhöht die Bewegungsfreiheit des Fahrradfahrers, wenn er im Stehen fährt.

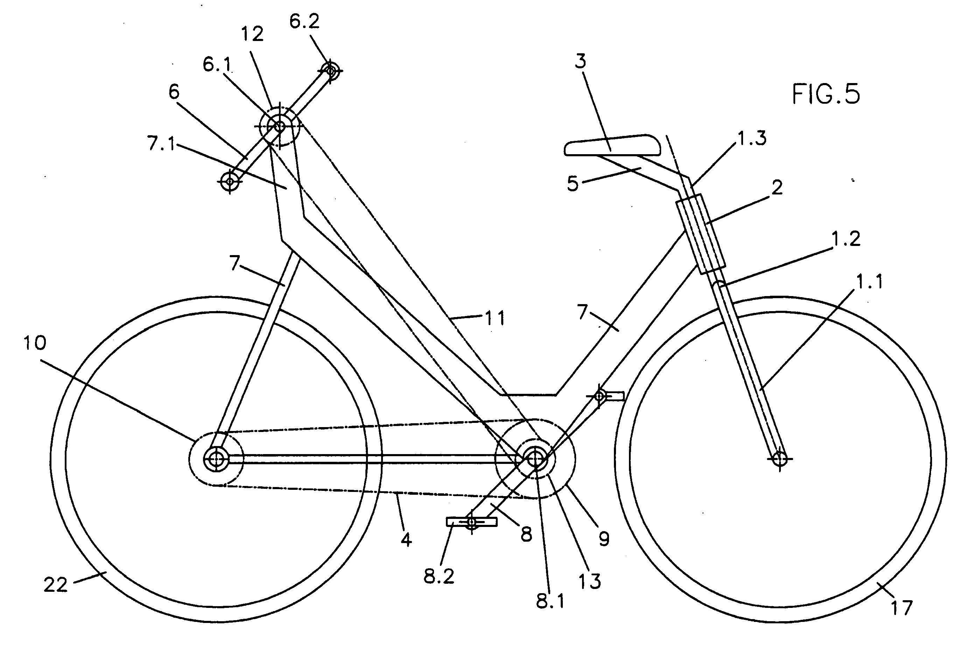

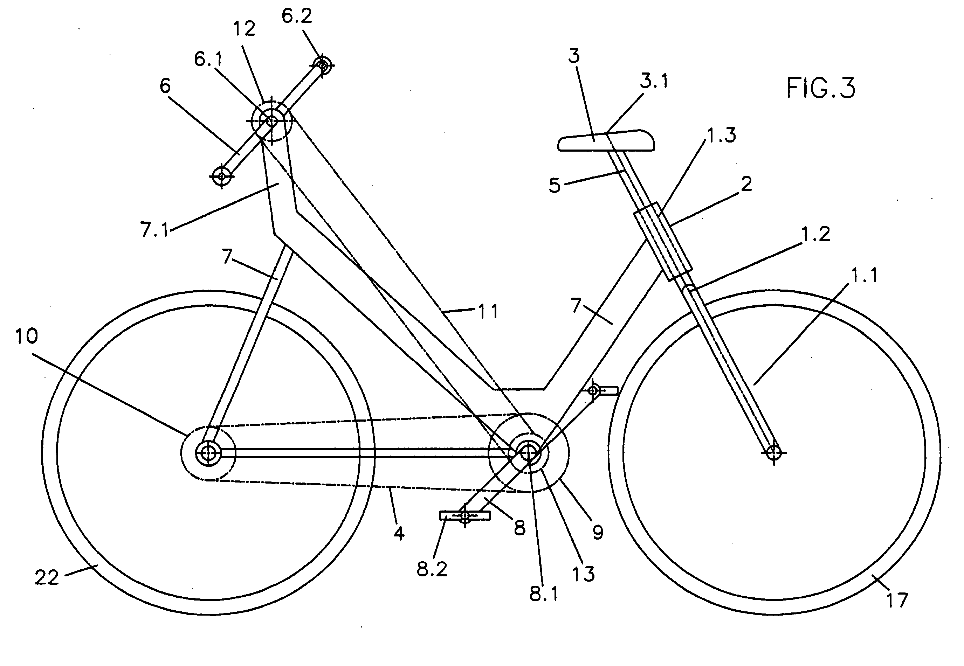

Bei der erfindungsgemäßen Variante A4 wird das Fahrrad über das Hinterrad 17 gelenkt (FIG.5,3). Die Achse des Vorderrades 22 ist in den Fahrradrahmen 7 geschraubt, somit kann das Vorderrad 22 nicht gelenkt werden. Zum Antrieb des Fahrrades bewegt der Fahrer mit seinen Händen die Handkurbeln 6 und mit seinen Füßen die Tretkurbeln 8. An den Kurbeln 6,8 sind Synchronscheiben 12,13 befestigt. Diese sind über einen Synchronriemen 11 miteinander verbunden. Somit ist ein synchroner Lauf der Kurbeln 6,8 gewährleistet. Der Synchronriemen 11 verläuft, aus Fahrersicht, links vom Fahrradrahmen 7. Auf der rechten Seite des Fahrradrahmens 7 verläuft die Antriebskette 4. Sie treibt über das Antriebskettenrad 9, welches fest mit der Tretkurbel 8 verbunden ist, und über das Antriebsritzel 10 das Vorderrad 22 an. Der Sattel 3 ist fest auf dem Lenkerarm 5 befestigt. Der Lenkerarm 5 des Sattels 3 ist fest mit dem Gabellagerrohr 1.3 verbunden. Schwenkt der Fahrradfahrer den Sattel 3 nach rechts dann fährt das Fahrrad, wenn es sich dabei vorwärts bewegt, eine Linkskurve. Schwenkt der Fahrradfahrer den Sattel 3 nach links dann fährt das Fahrrad, wenn es sich dabei vorwärts bewegt, eine Rechtskurve. Bei den Varianten der FIG.19, 16,18,13,4 ist die Lenkachse des Sattels 3 die Drehachse 7.5.1 des Lagers 7.5.
Bei der Variante der FIG.5 ist die Lenkachse des Sattels die Drehachse des Lenkkopflagers 2 der Gabel 1 des Hinterrades 17.

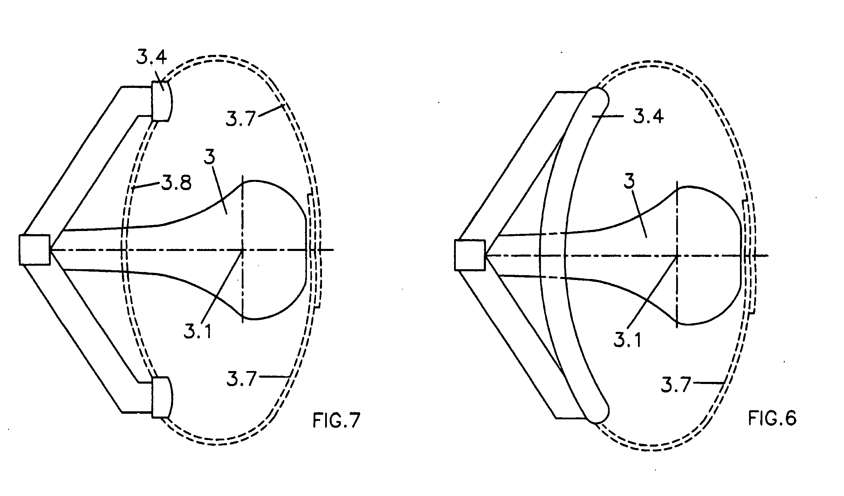

Die Sättel 3, der Varianten bei denen der Fahrradfahrer über den Sattel lenkt, können verschiedene Funktionsweisen haben.

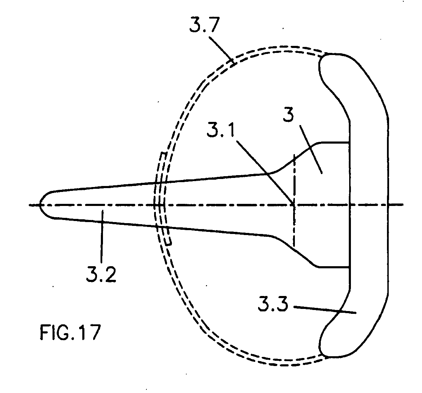

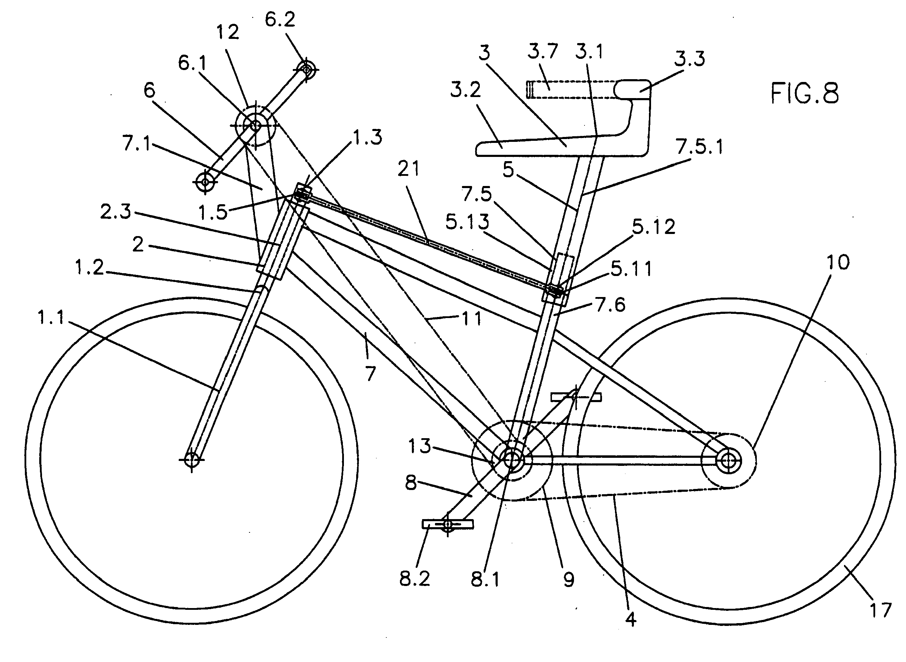

FIG.17 zeigt die Draufsicht des Sattels 3 aus FIG.8. Der Sattel 3 hat eine hintere Hüftstütze 3.3 die das Gesäß und die Hüfte des Fahrradfahrers beim Lenken unterstützt. Die Sattelspitze 3.2 ist verlängert. Dadurch kann das Fahrrad auch noch im Stehen gelenkt werden, indem die beiden Oberschenkel des Fahrradfahrers die Sattelspitze 3.2 einklemmen.
Bei einer anderen Variante ist der Sattel 3 mit einer vorderen Hüftstütze 3.4. fest verbunden (FIG.7,14). FIG.7 zeigt die Draufsicht auf den Sattel 3. Der Fahrradfahrer sitzt im Sattel 3 und drückt mit seinen beiden vorderen Hüftknochen rechts und links gegen diese Hüftstütze 3.4.

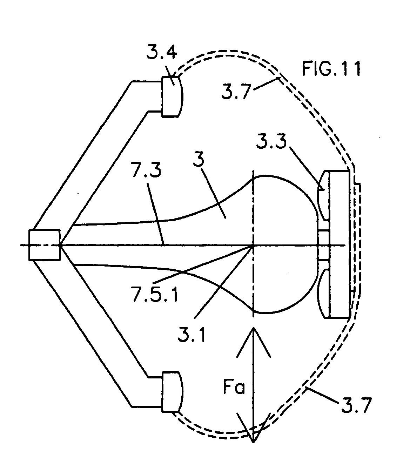

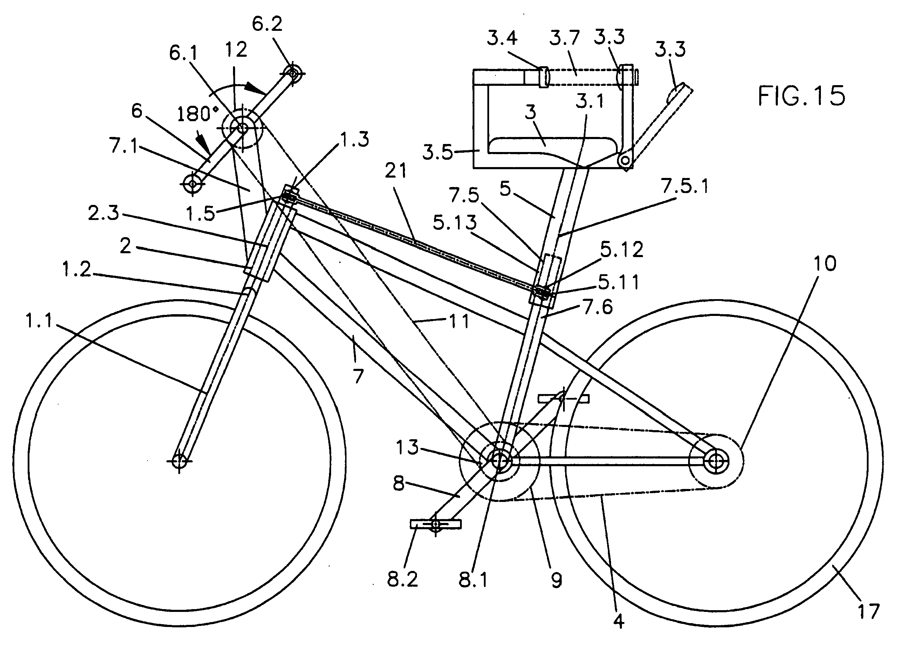

Alternativ ist die Auflage 3.4 durchgehend und umspannt zusätzlich den Bauch des Fahrradfahrers (FIG.14,6). FIG.6 zeigt die Draufsicht auf den Sattel 3. Der Fahrradfahrer sitzt im Sattel 3 und drückt mit seinem Bauch und seinen beiden vorderen Hüftknochen gegen diese Hüftstütze 3.4. Durch die Drehbewegung seiner Hüfte dreht der Fahrradfahrer, mittels der Hüftstütze 3.4, den Sattel 3 und lenkt somit das Fahrrad. Alternativ besitzt der Sattel 3 eine hintere Hüftstütze 3.3 und eine vordere Hüftstütze 3.4 (FIG.15,11).

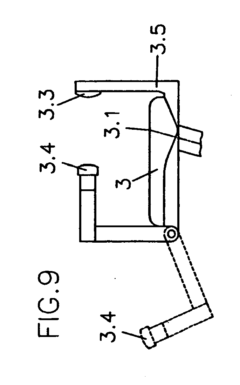

FIG.11 zeigt die Draufsicht auf den Sattel 3. Diese Hüftstütze 3.3 wird vor dem Aufsitzen des Fahrradfahrers auf den Sattel 3 heruntergeklappt (FIG.15 gestrichelt dargestellt). Nach dem Aufsitzen des Fahrradfahrers wird die Hüftstütze 3.3 hochgeklappt und fest in dieser Stellung arretiert. Alternativ kann die Hüftstütze 3.4 zum Einstieg des Fahrradfahrers runter geklappt werden (gestrichelt dargestellt) und die Hüftstütze 3.3 ist fest mit dem Sattel verbunden (FIG.9). Alternativ können beide Hüftstützen 3.3 und 3.4 zum Einstieg des Fahrradfahrers hoch und runter geklappt werden (ohne Abbildung).

Alternativ wird die Hüfte und Bauch des Fahrradfahrers zusätzlich mit einem Gürtel 3.7 (gestrichelt dargestellt) an die Hüftstütze 3.3 (FIG.8,17), oder die Hüftstütze 3.4 (FIG.14,15,11,7,6) gespannt. Der Gürtel 3.7 ist an die Hüftstütze 3.3 beziehungsweise 3.4 fest angebracht und ist mit einem Klettverschluß (FIG.17,15,11,7,14,6) oder einer Schnalle (ohne Abbildung) verschließbar. Der Gürtel 3.7 umspannt nur einen Teil der Hüfte, oder alternativ mit einem zusätzlichen Stück Gürtel 3.8 die ganze Hüfte (FIG.7).

Als Alternative für alle Varianten verfügt das Fahrrad zusätzlich über einen elektrischen Hilfsmotor. Solche Hilfsmotoren sind bekannt. Sie befinden sich üblicherweise in der Antriebsnabe des Hinterrades. Alternativ befindet sich der Motor, samt dem dazugehörigen Akku, im Sitzrohr des Fahrrades. Dann verbinden Zahnräder den Motor mit der Tretkurbel. Über diese Zahnräder überträgt der Motor sein Drehmoment an die Tretkurbel. Der Motor kann parallel zum manuellen Antrieb durch den Fahrradfahrer zugeschaltet werden. Mit Hilfe des Motors kann der Fahrradfahrer noch große Steigungen überwinden und beschleunigen, selbst wenn ihm nach einer langen Tour schon die Kraft in seinen Armen und Beinen ausgegangen ist.
Die Patentansprüche kennzeichnen den Schutzumfang. Die Beschreibung sind Ausführungsbeispiele des erfinderischen Gedankens.

## Patentansprüche

1. Fahrrad mit wenigstens einem Arm- und wenigstens einem Beinantrieb, mit mindestens einer Handkurbel (6) und mindestens einer Tretkurbel (8), **dadurch gekennzeichnet,**
**dass** wenigstens eine Hüftstütze (3.3,3.4) Teil der Fahrradlenkung ist.

2. Fahrrad nach Anspruch 1, **dadurch gekennzeichnet, dass** ein Sattel (3) Teil der Fahrradlenkung ist.

3. Fahrrad nach Anspruch 1 oder 2, **dadurch gekennzeichnet, dass** die wenigstens eine Hüftstütze (3.3, 3.4) und/oder der Sattel (3) verschieblich und/oder schwenkbar zum Fahrradrahmen (7) gelagert ist.

4. Fahrrad nach Anspruch 1 oder 2 oder 3, **dadurch gekennzeichnet, dass** die wenigstens eine Hüftstütze (3.3, 3.4), um eine Lenkachse (7.5.1) oder um ein Lenkkopflager (2), schwenkbar oder drehbar zum Fahrradrahmen (7) gelagert ist.

5. Fahrrad nach einem der Ansprüche 1 bis 4, **dadurch gekennzeichnet dass**, die mindestens eine Handkurbel (6) im Fahrradrahmen (7), oder in mindestens einem am Fahrradrahmen (7) befestigten Rahmenstück (7.1), gelagert ist.

6. Fahrrad nach einem der Ansprüche 2 bis 5, **dadurch gekennzeichnet, dass** die wenigstens eine Hüftstütze (3.3, 3.4), und/oder eine Hüftstütze (3.4), mit dem Sattel (3), fest oder verschieblich und/oder schwenkbar, verbunden ist.

7. Fahrrad nach einem der Ansprüche 1 bis 6, **dadurch gekennzeichnet, dass** wenigstens einen Zwischenlenker (21) Teil der Lenkung ist.

8. Fahrrad nach einem der Ansprüche 1 bis 7, **dadurch gekennzeichnet, dass** die Handkurbel 6 und die Tretkurbel 8 über Synchronscheiben 12,13 und einen Synchronriemen 11 miteinander verbunden sind und dass an der Tretkurbel 8 ein Antriebskettenrad 9 befestigt ist das über eine Antriebskette 4 mit dem Antriebsritzel 10 verbunden ist.

9. Fahrrad nach einem der Ansprüchen 2 bis 6 und 8, **dadurch gekennzeichnet, dass** der Sattel (3) mit der Gabel (1) des Hinterrades (17) verbunden ist.

10. Verfahren zum Fahren eines Fahrrades nach einem der Ansprüche 1 bis 9, **dadurch gekennzeichnet, dass** der Fahrradfahrer das Fahrrad lenkt, indem en die wenigstens eine Hüftstütze (3.3,3.4) bewegt.

11. Verfahren nach Anspruch 10, **dadurch gekennzeichnet, dass** wenigstens eine Hüftbewegung des Fahrradfahrers mittels wenigstens eines Gürtels (3.7) übertragen wird.

12. Verfahren nach Anspruch 10 oder 11, **dadurch gekennzeichnet, dass** der Fahrradfahrer beim Lenken einen Sattel (3) bewegt.

13. Verfahren nach einem der Ansprüche 10 bis 12, **dadurch gekennzeichnet, dass** eine Lenkkraft über wenigstens einen Zwischenlenker (21) übertragen wird.

14. Verfahren nach einem der Ansprüche 10 bis 13, **dadurch gekennzeichnet, dass** der Fahrradfahrer über das Hinterrad (17) lenkt.

15. Verfahren nach einem der Ansprüche 10 bis 14, **dadurch gekennzeichnet, dass** der Fahrradfahrer wenigstens eine Hüftstütze (3.3, 3.4) um eine Lenkachse (7.5.1) oder um ein Lenkkopflager (2), schwenkt oder dreht.

16. Verfahren nach einem der Ansprüche 10 bis 15, **dadurch gekennzeichnet, dass** ein Hilfsmotor das Fahrrad antreibt.

17. Verfahren nach einem der Ansprüche 10 bis 16, **dadurch gekennzeichnet, dass** die Armkurbelbewegungen über wenigstens eine Handkurbel (6) erfolgen und die wenigstens eine Handkurbel (6) nicht drehbar in einer Gabel (1) gelagert ist.

18. Verwendung eines Fahrrads gemäß einem der Ansprüche 1 bis 9.

## Claims

1. Bicycle having at least one arm-powered drive and at least one leg-powered drive, featuring at least one hand crank (6) and at least one pedal crank (8), **characterised in that** at least one hip support (3.3, 3.4) is part of the bicycle steering.

2. Bicycle according to claim 1, **characterised in that** a saddle (3) is part of the bicycle steering.

3. Bicycle according to claim 1 or 2, **characterised in that** at least one hip support (3.3, 3.4) and/or the saddle (3) is slidably and/or pivotably mounted to the bicycle frame (7).

4. Bicycle according to claim 1 or 2 or 3, **characterised in that** at least the one hip support (3.3, 3.4) is pivotably or swivelably mounted around a steering axis (7.5.1) or around a steering bearing (2) relative to the bicycle frame (7).

5. Bicycle according to one of claims 1 to 4, **characterised in that** at least one hand crank (6) is mounted on the bicycle frame (7) or on a frame segment (7.1) attached to the bicycle frame.

6. Bicycle according to one of claims 2 to 5, **characterised in that** at least one hip support (3.3, 3.4) is firmly mounted to the saddle or mounted to the saddle such that the arrangement is slideable and/or pivotable.

7. Bicycle according to one of claims 1 to 6, **characterised in that** at least one intermediate steering member (21) is part of the steering.

8. Bicycle according to one of claims 1 to 7, **characterised in that** the hand crank 6 and pedal crank 8 are connected via synchronous pulleys 12, 13 and a synchronous belt 11 and **in that** a chain drive sprocket is attached to the pedal crank 8, this sprocket being connected to the drive pinion 10 via a drive chain.

9. Bicycle according to one of claims 2 to 6 and 8, **characterised in that** the saddle (3) is mounted to the rear-wheel (17) fork (1).

10. Method for driving a bicycle according to one of claims 1 to 9, **characterised in that** the bicyclist guides the bicycle by moving at least one hip support (3.3, 3.4).

11. Method according to claim 10, **characterised in that** at least one hip movement of the bicyclist is transmitted by means of at least one belt (3.7).

12. Method according to claim 10 or 11, **characterised in that** the bicyclist directs a saddle for steering purposes.

13. Method according to one of claims 10 to 12, **characterised in that** a steering force is transmitted via at least one intermediate steering member (21).

14. Method according to one of claims 10 to 13, **characterised in that** the bicyclist uses the rear wheel (17) for steering purposes.

15. Method according to one of claims 10 to 14, **characterised in that** the bicyclist swivels or turns at least one hip support (3.3, 3.4) around a steering axis (7.5.1) or around a steering bearing (2).

16. Method according to one of claims 10 to 15, **characterised in that** the bicycle is powered by an auxiliary motor.

17. Method according to one of claims 10 to 16, **characterised in that** the cranking motion of the arm is performed via at least one hand crank (6) and that at least one hand crank (6) is not pivotably mounted on a fork (1).

18. Use of a bicycle according to one of claims 1 to 9.

## Revendications

1. Bicyclette équipée d'au moins un entraînement au bras ou à la jambe avec au moins une manivelle à main (6) et au moins une manivelle de pédalier (8), **caractérisée par le fait que**,
un appui pour la hanche (3.3, 3.4) forme partie du guidage de la bicyclette.

2. Bicyclette selon la revendication 1, **caractérisée par le fait qu'**une selle (3) forme partie du guidage de la bicyclette.

3. Bicyclette selon une des revendications 1 ou 2, **caractérisée par le fait qu'**au moins un appui pour la hanche (3.3, 3.4) et / ou une selle (3) est logé(e) de manière décalable et / ou pivotable par rapport au cadre de la bicyclette (7).

4. Bicyclette selon une des revendications 1 ou 2 ou 3, **caractérisée par le fait qu'**au moins un appui pour la hanche (3.3, 3.4) est logé autour d'un arbre de direction (7.5.1) ou d'une crapaudine (2) de manière décalable et / ou pivotable par rapport au cadre de la bicyclette (7).

5. Bicyclette selon une des revendications de 1 à 4, **caractérisée par le fait qu'**au moins une manivelle à main (6) est logée dans le cadre de la bicyclette (7) ou dans au moins un élément du cadre (7.1.) fixé au cadre de la bicyclette (7).

6. Bicyclette selon une des revendications de 2 à 5, **caractérisée par le fait qu'**au moins un appui pour la hanche (3.3, 3.4) est relié avec la selle (3) de manière fixe, décalable et / ou pivotable.

7. Bicyclette selon une des revendications de 1 à 6, **caractérisée par le fait qu'**au moins un élément de direction intermédiaire (21) forme partie intégrale du guidage.

8. Bicyclette selon une des revendications de 1 à 7, **caractérisée par le fait que** la manivelle à main 6 et la manivelle de pédalier 8 sont reliées entre elles par des rondelles de synchronisation 12, 13 et une courroie de synchronisation 11 et qu'une roue dentée d'entraînement à chaîne 9, reliée au pignon d'entraînement 10 via une chaîne d'entraînement 4, est fixée à la manivelle de pédalier 8.

9. Bicyclette selon une des revendications de 2 à 6 et 8, **caractérisée par le fait que** la selle (3) est reliée avec la fourche (1) de la roue arrière (17).

10. Méthode pour rouler une bicyclette selon une des revendications de 1 à 9, **caractérisée par le fait que** le cycliste dirige la bicyclette via le mouvement d'au moins un appui pour la hanche (3.3, 3.4).

11. Méthode selon la revendication 10, **caractérisée par le fait qu'**au moins un mouvement de la hanche du cycliste est transmis via au moins une ceinture (3.7).

12. Méthode selon une des revendications 10 ou 11, **caractérisée par le fait que** le cycliste bouge une selle (3) au cours du guidage.

13. Méthode selon une des revendications de 10 à 12, **caractérisée par le fait que** la force de guidage est transmise par au moins un élément de direction intermédiaire (21).

14. Méthode selon une des revendications de 10 à 13, **caractérisée par le fait que** le cycliste dirige la bicyclette via la roue arrière (17).

15. Méthode selon une des revendications de 10 à 14, **caractérisée par le fait que** le cycliste pivote ou tourne au moins un appui pour la hanche (3.3, 3.4) autour d'un arbre de direction (7.5.1) ou autour d'une crapaudine (2).

16. Méthode selon une des revendications de 10 à 15, **caractérisée par le fait que** la bicyclette est entraînée par un moteur auxiliaire.

17. Méthode selon une des revendications de 10 à 16, **caractérisée par le fait que** les mouvements de la manivelle au bras sont effectués par au moins une manivelle à main (6) et qu'au moins une manivelle à main (6) est logée de manière pivotable dans une fourche (1).

18. Utilisation d'une bicyclette selon une des revendications de 1 à 9.
